# EUROPEAN PATENT SPECIFICATION

(11) **EP 4 337 948 B1**
(45) Date of publication and mention of the grant of the patent: **30.04.2025**
(21) Application number: 22728496.5
(22) Date of filing: 10.05.2022
(51) Int. Cl.: G01N 29/04, G01N 29/22, G01N 29/24, G01N 29/28

(54) **PORTABLE ULTRASONIC PROBE FOR POLAR SCANNING**
TRAGBARE ULTRASCHALLPROBE FÜR POLARSCAN
SONDE ULTRASONIQUE PORTABLE POUR BALAYAGE POLAIRE

(30) Priority: 11.05.2021 GB 202106690
(43) Date of publication of application: 20.03.2024
(73) Proprietor: Nsonify Ltd, Edinburgh EH2 4AN (GB)
(72) Inventor: ARETOS, Anastasios, Edinburgh, Lothian EH14 7HH (GB); HALL, Liam David, Longniddry, Lothian EH32 0NB (GB); MCLEAN, Calum Conner, Edinburgh, Lothian EH10 4QT (GB)
(74) Representative: Campbell, Arlene
(86) International application number: PCT/EP2022/062569
(87) International publication number: WO 2022/238368

(56) References cited:
- GB-A- 1 539 512
- US-A- 5 576 592
- KERSEMANS MATHIAS: "Combined Experimental-Numerical Study to the Ultrasonic Polar Scan for Inspection and Characterization of (Damaged) Anisotropic Materials", 1 January 2014 (2014-01-01), pages 81 - 81, XP055952927, Retrieved from the Internet <URL:https://core.ac.uk/download/pdf/55726141.pdf> [retrieved on 20220818]
- MATHIAS KERSEMANS ET AL: "The ultrasonic polar scan for composite characterisation and damage assessment: Past, present and future", APPLIED SCIENCES, vol. 6, no. 58, 1 January 2016 (2016-01-01), XP055936916, DOI: 10.3390/app6020058

## Description

The present invention relates to ultrasonic inspection and in particular, though not exclusively, to a compact portable ultrasonic inspection apparatus and a method of generating polar scans to perform in-situ non-destructive testing (NDT) inspection of anisotropic or composite materials used in safety-critical objects or structures such as aerospace parts.

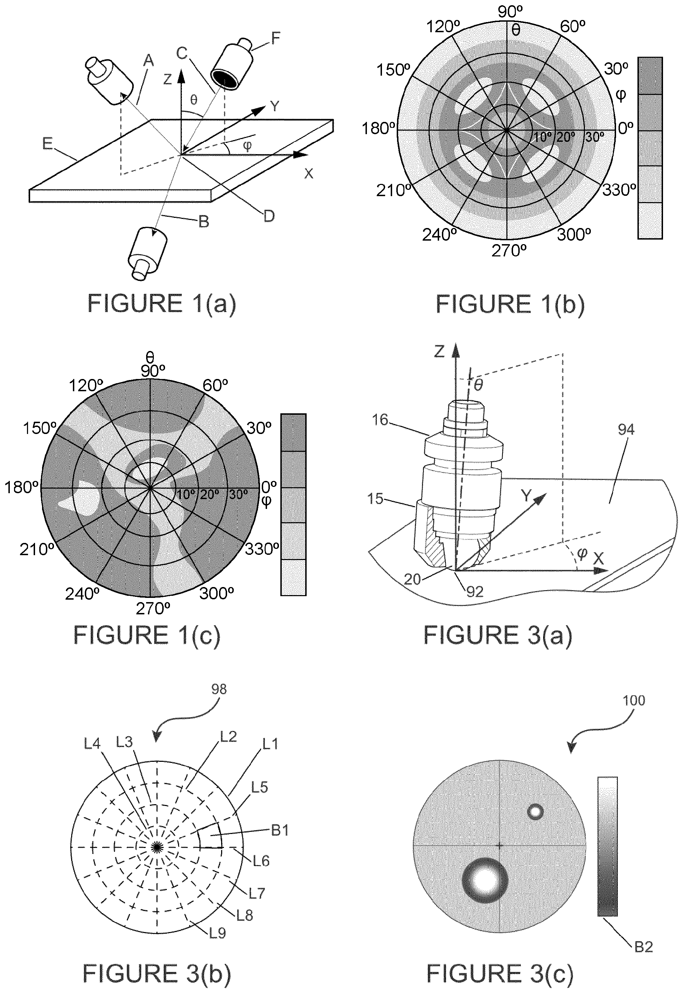

Ultrasonic polar scans were first introduced as an ultrasound inspection technique in the early 1980's. Figure 1(a) illustrates how the polar scan is gathered by collecting a reflected A or transmitted B ultrasonic signal C and mapping the maximum amplitude for all angles of incidence upon a point D on the test object E and Figure 1(b) shows a computed polar scan of the reflected and/or transmitted fields on a composite material providing characteristic 'fingerprints' of the structural properties of the object under test. In addition to the reflected and transmitted fields, a small part of the incident acoustic energy can be backscattered and by recording this backscattered signal for every possible angle of incidence a backscattered polar scan can be formed, see Figure 1(c), which offers more information on the internal structure of the object. Applications of polar scans for the inspection of composites include the estimation of fibre direction, porosity measurements and the detection of various types of damage or internal defects, for example ply waviness, delamination, matrix cracking. Thus a polar scan can be used to derive reliable geometric measurements and/or ascertain internal health-condition information about the test object E.

It will be apparent that to make such backscatter measurements a transceiver F must be scanned over an entire hemispherical surface at a fixed distance from the incidence point D. To achieve this a pulse-echo ultrasonic probe is attached to an articulated arm e.g. a multi-axis numerically controlled positioning apparatus with the object under test being completely submerged in a double-distilled water bath to ensure consistent ultrasonic coupling for transmitted and reflected ultrasonic waves. However, such a system is bulky, mechanically complex and relatively expensive and therefore has so far been confined to a laboratory or research environment. As the object must be brought to the system, large structures or inspections in the field such as testing parts in-situ on aircraft, for example, are impractical.

In-situ ultrasonic NDT testing is available using fixed angle probes in which the angle of incidence is typically normal to the object and a scan is made by moving the probe over the surface of the object. It may be impractical to maintain consistent water coupling in such in-situ industrial UT scanning (i.e. via immersion bath or employing squirter-bubbler subsystems) and coupling can alternatively be achieved by a deformable and typically elastic solid or gelatinous ultrasonic coupling member as disclosed in WO2005057205. US6552841 discloses such a straight-beam ultrasound apparatus providing normal incidence C-scans, and is marketed as Acoustocam(RTM) from Imperium Inc. This high spatial resolution probe is used for detecting and characterising various defects found in aerospace composite structures e.g. impact damage in CFRP (carbon fibre reinforced polymer). However, the extended rigid planar contact aperture of the probe does not easily accommodate inspections of more curved radii composite structures and while the orthogonal inspection waves projected by any straight-beam probe can provide basic delamination detection and sizing within a composite structure via the echoes from the closest delaminated layer detected within the returned ultrasound signal (i.e. the A-scan), often they will not detect further delaminated layers hidden behind this detected layer closest to the probe on the inspection surface. Moreover, such a multi-layered defect condition is usually considered to be more serious as it can lead to matrix cracking and possibly future structural failure. Such matrix cracks are typically orthogonal to the composite inspection surface. However, any vertically orientated crack defects found within composite or metallic parts or structures under test are inherently more difficult to detect with a straight-beam probe due to the smaller surface area of the crack defect insonified by the orthogonally projected inspections waves.

More conventional phased array ultrasonic probes also offer C-scan inspections of composite structures and do not require immersion or squirter-bubbler sub-systems for coupling and delay line functionality e.g. RollerFORM(RTM) phased array wheel probe and Aqualene(RTM) elastomer wedge by Olympus-IMS. Both linear phased array probes for flat composite structures and bespoke curved linear array probes for curved radii composite structures are typically employed e.g. OmniScan(RTM) PA flaw detector by Olympus-IMS. However, such phased array inspection apparatus may be bulky, difficult to ultrasonically couple to the inspection surface and susceptible to costly replacement issues e.g. dead elements within the array may render an expensive phased array transducer ineffective. They also require expensive ultrasonic transmit-receive hardware and do not easily accommodate a wide range of different inspection surface geometries without a range of different probes.

Additionally, existing hand-held ultrasonic inspection probes are typically used by relatively skilled ultrasound NDT practitioners to detect, locate and classify internal defects in a range of safety-critical parts and/or also to make basic thickness measurements that can be used to infer defects such as corrosion. Single channel pulse-echo ultrasound inspection systems are typically effective on parallel geometry structures made from isotropic metals without orientation dependent properties (e.g. parallel pipes or plate structures). However, they are not generally suited to thickness measurements across non-parallel geometries, primarily because this involves applying the probe steadily and precisely at an optimal orientation angle that departs from the inspection surface normal vector and takes account of refraction at the interface between the coupling member and the part (i.e. as predicted by Snell's law). In practice, it is extremely difficult for even the most experienced human operator to achieve this optimal off-normal axis measurement in a highly repeatable manner with a hand-held probe.

GB1539512 and US5576592 are two prior art apparatus useful for understanding the invention.

The PhD thesis by Mathias Kersemans, "Combined Experimental-Numerical Study to the Ultrasonic Polar Scan for Inspection and Characterization of (Damaged) Anisotropic Materials", 1 January 2014, page 81, and the article "The ultrasonic polar scan for composite characterisation and damage assessment: Past, present and future", Mathias Kersemans et al, Applied Sciences, vol. 6, no. 58, 1 January 2016, teach examples of known ultrasonic inspection apparatuses.

It is therefore an object of the present invention to provide a compact portable ultrasonic inspection apparatus which obviates or mitigates at least some of the disadvantages of the prior art.

It is a further object of the invention to provide a method of in-situ non-destructive testing (NDT) inspection of objects which obviates or mitigates at least some of the disadvantages of the prior art.

According to a first aspect of the present invention there is provided a portable ultrasonic inspection apparatus comprising:
an ultrasonic probe and an operating unit, the ultrasonic probe comprising:
an ultrasonic transducer including a coupling member for contacting and acoustically coupling to a measurement point on a surface of an object to be inspected; and
a housing comprising a frame assembly in which the ultrasonic transducer is located with the coupling member arranged at an end thereof;
the probe includes three landing elements for locating the probe on the surface of the object, the landing elements being spaced apart from each other in an array and located at the end of the housing, with the coupling member to contact the measurement point being arranged within the array; and
characterised in that:
   the ultrasonic transducer and the coupling member are positioned on a stylus;
   the housing includes a motion system to pivot the stylus about the measurement point; and
   the three landing elements about the measurement point describe a surface normal plane at the measurement point with a normal vector coinciding with a rest orientation of the stylus to provide a polar coordinate origin for the compilation of polar scan maps using the probe.

In this way, by taking oblique angle ultrasound measurements while pivoting the ultrasonic transducer about the point, a polar scan can be constructed as the angle of incidence is changed in a polar co-ordinate system. The ultrasonic transducer is moved within the housing so that multi-axis numerically controlled positioning apparatus is not required while the landing elements make fixed contact with the object under inspection part at a number of close contact locations evenly spaced about the contact point (i.e. at the selected measurement node). In this way, the housing and frame assembly remain stationary during the measurements and are orientated nominally along the inspection surface normal vector at the contact point (i.e. along the polar map's [0,0] origin). This may in reality be an aggregated spatially filtered estimate of the surface normal at the contact point, defined by the spacing between the landing elements. This arrangement provides a compact probe which can have a diameter of less than 20mm and a length less than 50mm making it easily transportable.

Preferably the ultrasonic transducer is a pulse echo transducer, so that the emitting and detection of the acoustic energy is from the same position. The ultrasonic transducer and the coupling member are positioned on a stylus. In this way, there is a central moving stylus assembly incorporating a pulse-echo ultrasonic transducer with a deformable coupling member in contact with the inspection object at a measurement node (point) with the other extremity purposely moved so the orientation of the transducer is altered and tracked during a sequence of ultrasonic measurements.

Preferably, the landing elements are spherical bearings. In this way, the probe can be held against the object to keep the housing and frame assembly stationary during measurements. The holding force may be applied via a human operator, a dedicated fixture and/or automatic means such as but not limited to robot arms, or any multi-axis numerically controlled positioning apparatus. The apparatus may include magnets, electromagnets, one or more vacuum suction pads or a lining of high-friction material, to hold the landing elements against the object. Preferably, the landing elements are spaced equidistantly from each other forming an equilateral triangle array. Alternatively, the landing elements are spaced apart to form an isosceles triangle array. In this way, such a configuration would allow the frame assembly to be nominally orientated at a surface normal vector. The landing elements may be configured to move radially with respect to the coupling member. In this way, the landing elements may describe a circle whose diameter can be adjusted to reduce the distance between the landing elements and the measurement contact point, while maintaining the distance as equal between the landing elements. In this way, the footprint of the probe made by the landing elements can be adjusted to match the available space on the object.

Preferably the motion system comprises an arrangement selected from one or more of a group comprising: permanent magnets, controllable electro-magnets, mechanical springs, electric motors, pulleys, pistons and positional actuators wherein the arrangement is located between the stylus and the frame assembly. In this way, orbital motion at the end of the stylus can be induced with the opposite end of the stylus with the ultrasound coupling member attached remaining on the point as ultrasonic measurements are made to compile each polar scan.

Preferably the apparatus includes a tracking system for determining the stylus orientation with respect to the object surface. In this way, the stylus's polar coordinate orientation can be measured directly or inferred indirectly and temporally synchronised with the sequence of ultrasound measurements taken to compile each polar scan. The tracking system may comprise a light-source mounted on the moving stylus facing an optical position-sensitive detector on the frame assembly. The light source may be a luminescent tip or a laser diode. The tracking system may comprise an imaging sensor on the frame assembly that is configured to have the moving stylus within its field of view. The imaging sensor may be CMOS based or a CCD. The tracking system may comprise a conductive plug on the moving stylus facing a quadrature array of inductive sensing coils on the frame assembly. The tracking system may comprise an array of eddy-current or capacitive sensors on the stylus or frame assembly. The tracking system may include any type or combination of positional encoder. It will also be recognised that mere dead reckoning of moving components could also provide the information.

The apparatus may include an axial displacement mechanism to extend the off-axis travel of the probe when pivoting the ultrasonic transducer about the contact point.

The apparatus may further include means to position the probe on the surface, these means being selected from a group comprising: a drone, an articulated arm on a small unattended ground vehicle (SUGV), a remotely operated vehicle (ROV), an articulated arm and a multi-axis numerically controlled positioning apparatus.

According to a second aspect of the present invention there is provided a method of non-destructive inspection of an object comprising the steps:
(a) providing an ultrasonic inspection apparatus according to the first aspect;
(b) locating the landing elements on a surface of the object and making contact on a measurement point of the surface with the coupling member;
(c) inducing pivotal movement of the stylus about the measurement point;
(d) taking oblique angle ultrasound measurements as the transducer moves; and
(e) processing the ultrasound measurements as a polar scan map to provide inspection information.

In this way, the transducer is moved within a static housing to make measurements at a single contact point, or measurement node. The transducer is at a fixed distance from the contact point. This greatly simplifies the collection of ultrasound measurements for NDT inspection.

Preferably, the ultrasound measurements are collected as A-scans and processed to provide at least a portion of a polar scan. More preferably, the polar scan is a backscattered polar scan. In this way, the polar scan can be used to determine structural characteristics of an object for testing and inspection purposes. Preferably, the polar scans of backscattered ultrasonic energy are compiled in real-time.

Preferably, the movement of the transducer with respect to the contact point is measured and each ultrasound measurement associated with a transducer position. In this way, a polar map providing a grid of energy bins can be populated to form the polar scan. The grid dimensions will determine the resolution of the measurement system. The method may include measuring the direction of a laser beam coupled to an end of the transducer by a light sending device to determine an orientation of the transducer for each ultrasound measurement. Alternatively, the method may include determining the orientation of the transducer by monitoring the position of a luminescent spot within the field of view of an imaging sensor. Alternatively, the method may include determining an orientation of the transducer by monitoring movement of a conductive element coupled to the transducer within an array of inductive sensing coils.

At step (c), an end of the transducer may be moved in an orbital pivoted pattern. The movement of the transducer may be stochastically induced. In this way, the movement is imprecise or random. Alternatively or additionally, the movement of the transducer is deterministic. In this way, the movement is controlled. The method may include both stochastically induced and deterministic movement.

Preferably, the method includes adapting controlled transducer movements during the ultrasonic measurements based upon real-time analysis of the recorded A-scans and/or portions of the evolving polar scan as they are being compiled. In this way, the transducer can be orientated to take measurements at orientations which have been missed in an earlier stochastically induced movement, limit measurements to areas of the surface were a-priori knowledge has determined will be of interest, and to increase the resolution of measurements at an area which is determined to be of interest.

Optionally, optimal adaptive paths of movement for the transducer are derived automatically across different part geometries based upon reinforcement learning methods utilising Neural networks. Steps in the learning method may provide positive rewards from continuous population of previously uncovered or not adequately covered portions (i.e. energy bins) of the polar map where energy resides and provide negative rewards (penalisation) for covering stylus orientations where no energy is present or for redundant coverage of previously covered portions of the polar map. This speeds up the time to perform a polar scan.

Preferably, the method includes the step of automatically interpretating a compiled polar scan to detect and/or classify structural defects based upon one or more of methods from a group comprising: conventional statistical square-law detection criterion (e.g. defect detection based upon Neyman-Pearson CFAR detection); machine learning involving supervised learning (e.g. defect classification based upon a Neural Network of polar scan map imagery); and unsupervised learning (e.g. hierarchical clustering algorithms). In this way, the inspection apparatus can determine defects in real-time in the field.

The method may include the additional step of moving the probe to a further contact point and repeating the steps. In this way, inspection and measurements can be made across a surface. Preferably, the further contact point is selected on the basis of a previous polar scan at a nearby contact point. Preferably also, movement of the transducer at the further point is limited to orientations identified as having greatest interest from the previous polar scan at the nearby contact point. This speeds up the overall inspection time (e.g. across a sequence of measurement points).

The method may include the step of axially displacing one or more of the landing elements before step (b). In this way, the off-axis travel of the probe can be extended when pivoting the ultrasonic transducer about the contact point. The landing elements about the measurement point without axial displacement describe or approximate a surface normal plane at the measurement point with a normal vector (i.e. given mathematically by the cross product of vectors joining the elements) that coincides with the rest orientation of the stylus (i.e. the nominal orientation of the attached probe) and consequently provides a polar coordinate origin for subsequent polar scan maps compiled by the invention.

The method may include the step of mounting the probe on a movable automation platform to move the probe between contact points.

In the description that follows, the drawings are not necessarily to scale. Certain features of the invention may be shown exaggerated in scale or in somewhat schematic form, and some details of conventional elements may not be shown in the interest of clarity and conciseness. It is to be fully recognized that the different teachings of the embodiments discussed below and the individual features may be employed separately or in any suitable combination to produce the desired results.

Accordingly, the drawings and descriptions are to be regarded as illustrative in nature, and not as restrictive. Furthermore, the terminology and phraseology used herein is solely used for descriptive purposes and should not be construed as limiting in scope. Use of terms such as "upper" and "lower" are considered relative and though the well bore is drawn in the ideal vertical orientation, it will be appreciated that this may be deviated. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes.

All numerical values in this disclosure are understood as being modified by "about". All singular forms of elements, or any other components described herein including (without limitations) components of the apparatus are understood to include plural forms thereof.

There will now be described, by way of example only, various embodiments of the invention with reference to the drawings, of which:
Figures 1(a)-(c) are illustrations of (a) the principle of ultrasonic polar scanning, (b) a computed ultrasonic polar scan and (c) an ultrasonic backscatter polar scan, according to the prior art;
Figures 2(a)-(d) are (a) an isometric projection view, (b) a projected view, (c) a side sectional view and (d) a partial projected sectional view of a compact portable ultrasonic inspection apparatus according to an embodiment of the present invention;
Figures 3(a)-(c) are illustrations of (a) a probe according to the present invention on a surface indicating the polar coordinate and cartesian framework, (b) a polar coordinate grid for a polar map, and (c) a polar scan, determined using a method according to an embodiment of the present invention;
Figures 4(a) and 4(b) are illustrative polar scans at (a) position R1 and (b) position R2 on the surface of an object being inspected according to an embodiment of the present invention;
Figures 5(a) and 5(b) are (a) a side sectional view and (b) a partial projected sectional view of a probe of a compact portable ultrasonic inspection apparatus according to a further embodiment of the present invention;
Figures 6(a)-(c) are (a) a side sectional view, (b) a partial projected sectional view and (c) internal view of a part of a probe of a compact portable ultrasonic inspection apparatus according to another embodiment of the present invention;
Figures 7(a) and 7(b) are a (a) cross-sectional view and (b) planar view of an adjustment mechanism to move the landing elements in a compact portable ultrasonic inspection apparatus according to an embodiment of the present invention;
Figure 8(a) and 8(b) are a (a) cross-sectional view and (b) part cut-away schematic of an axial displacement mechanism according to an embodiment of the present invention; and
Figures 9(a) and 9(b) are projected views of a compact portable ultrasonic inspection apparatus deployed on an (a) a small unmanned ground vehicle (SUGV) and (b) an unmanned airborne drone.

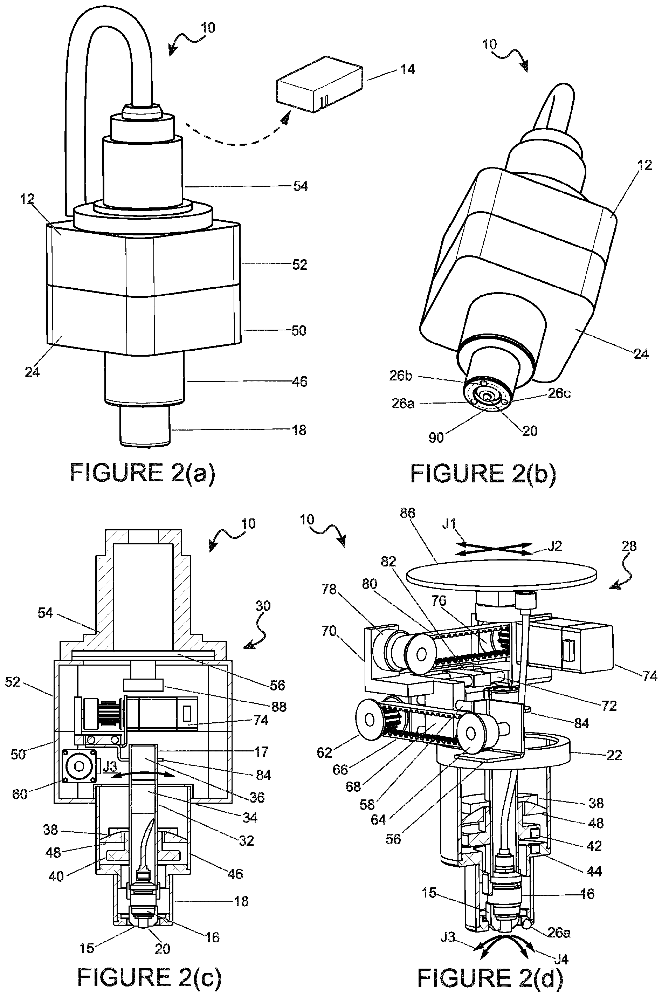

Reference is initially made to Figures 2(a)-(d) of the drawings which illustrate a compact portable ultrasonic inspection apparatus, generally indicated by reference numeral 10, comprising a hand-held ultrasonic probe 12 and an operating unit 14, according to an embodiment of the present invention. Probe 12 comprises a transducer 16 which at a first end 18 has a coupling member 20, supported in a frame assembly 22 of a housing 24. The transducer 16 is mounted on a stylus 32 and with the coupling member 20 forms a central moving stylus assembly. At the first end 18, three landing elements 26a,b,c are located on the housing 24, in an array being spaced apart from each other and surrounding the coupling member 20. Within the housing 24 there is located a motion system 28. The landing elements 26a,b,c surround the coupling member 20, so that when the probe 12 is placed on an object (see Figure 3(a)), the landing elements 26a,b,c rest on a surface of the object while the coupling member 20 makes a point contact on the surface of the object. The motion system 28 moves the opposing end 17 of the stylus 32 so as to pivot the coupling member 20 and the transducer 16 about the contact point.

The deformable and usually elastic coupling member 20 is held in place via a holder 15 to make direct contact with the inspection part at the selected fixed measurement node (contact point) with the other end 17 of the stylus 32 free to move in an orbital manner about this fixed point so that the orientation of the transducer 16 relative to the inspection surface can be purposely and automatically altered during a sequence of ultrasound measurements that are then used to construct the polar coordinate maps of backscattered acoustic energy (or any A-scan signal metric extracted from each ultrasound measurement), as will be described. The orbital motion of the stylus 32 dictates that the orientation of the transducer 16 changes during the polar scan measurement, but it remains at a fixed distance from the selected measurement node and is always directed towards this point. The deformable coupling member 20 changes shape to accommodate this changing orientation but remains stationary with no lateral movement across the inspection surface.

The surrounding stationary frame assembly 22 will usually make fixed contact with the inspection part at the landing elements 26a-c, providing a number of close contact points (e.g. at least 3) spaced about the central stylus's 32 coupling tip contact position (i.e. at the selected measurement node) so that the frame assembly 22 remains stationary during the measurements and is orientated nominally along the inspection surface normal vector at the stylus contact position (i.e. along the polar map's [0,0] origin). In a preferred embodiment, as shown, the landing elements 26a,b,c are in a circular array being equally distant from each other and the coupling member 20. Other arrays such as an isosceles triangle can also be used. Within the frame assembly 22 there is a motion system 28 that can induce either pseudo-random or more typically controlled deterministic and predictable pivotal motions within the stylus 32 around its fixed measurement position on the inspection surface (i.e. at the selected measurement node).

The apparatus 10 may also include a tracking system 30 within the frame assembly 22. This tracks the movement of the transducer 16 around the contact point. The tracking system 30 comprises apparatus to give a sensing modality via an optical, inductive or capacitive position sensing device. The tracking system 30 is an optical system but any other tracking means such as inductive, Hall effect, eddy-current and capacitive sensing methods could be used to measure and track stylus orientation in a contactless manner.

In this first embodiment, the transducer 16 is an ultrasound transducer operating in a pulse echo mode. The transducer 16 may be selected for the specific NDT application being addressed. For example, for many applications involving the inspection of common aerospace metals of modest thickness (e.g. 150µm-35mm), a conventional 15MHz naturally focussed piezoceramic device (e.g. an Olympus V208) may be used. However, for other applications requiring improved penetration through the part/structure (e.g. the inspection across many laminated composite materials), a lower-frequency unfocussed transducer (e.g. 5MHz device) may be preferred. For some other specialised applications, a much higher-frequency focussed transducer (e.g. a 50MHz spherically focussed thin-film device from Novosound Ltd) may be preferred for additional angular resolution. Although longitudinal wave (L-wave) devices are preferred, shear wave (S-wave) transducers can also be employed with coupling members that support shear wave propagation.

The ultrasonic transducer 16 has a deformable elastomer ultrasonic coupling member 20 that also can act inherently as an ultrasonic delay line attached to it via a holder . Such coupling members are known in the art and are used to efficiently couple ultrasound waves to an inspection part or object without requiring immersion of the object. The coupling member 20 is a deformable and typically elastic solid or gelatinous structure being a mechanically strong elastomer with a low acoustic attenuation. Such an ultrasonic coupling member 20 is disclosed in WO2005057205A1, the contents of which are incorporated herein by reference. Those skilled in the art will realise that several different forms of deformable elastic coupling layer material of the member 20, for example, those purpose-designed to be: moderately wet to touch in order to improve ultrasonic transmission against rougher inspection surfaces; highly elastic but extremely strong and resistant to tearing for more prolonged use in harsh industrial environments; resistant to high temperatures and thermally insulate and protect the transducer from a hot inspection surfaces; and to have low acoustic attenuation characteristics but an acoustic impedance (i.e. the product of its density and sound speed) that closely matches that of the composite structure under test so as to achieve optimal acoustic transmission.

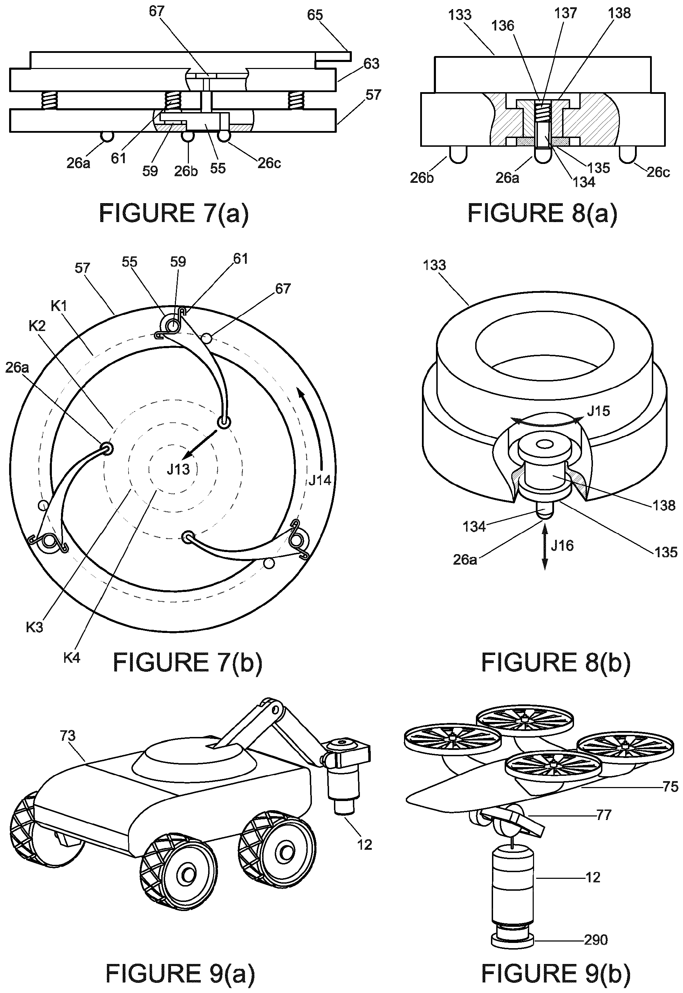

Within the stylus 32, a laser light diode 34 and a set of beam forming optics 36 are housed to form the tracking system 30. On the stylus 32 a female spherical bearing 38 is attached, below the female spherical bearing 38 a holder sleeve 40 is affixed, within the holder sleeve 40 a set of magnets 42 are embedded. A matching set of magnets 44 is embedded on the bottom end 18 of the device. In the bottom end 18 a set of three spheres 26a-c are attached. These spheres 26a-c are the landing elements which contact the inspection surface and ensure the frame assembly 22 is orientated normally to the inspection surface at the measurement node. While the loading sleeve 290 (best seen in Figure 9(b)) includes magnets, electromagnets, a vacuum suction pad or a group of such pads or a lining of any suitable high-friction material could be used to temporarily fix the probe 12 to the inspection surface for measurement.

The bottom end 18 is attached to the middle section 46. Within the middle section 46 a male spherical bearing 48 is affixed. Upon the middle section 46 a lower motor compartment 50 is attached, on the lower motor compartment 50 the top motor compartment 52 is attached. On the top motor compartment 52 the connector holder 54 is affixed. Via the action of the magnets 42 on the holder sleeve 40 and the magnets 44 on the bottom end 18 the female spherical bearing 38 and male spherical bearing 48 are brought in contact. Alternatively, a spring and nut may provide the holding force in keeping the male spherical bearing 48 and female spherical bearing 38 together.

Within the lower motor compartment 50 a main support structure 56 is mounted. The main support structure 56 houses a linear guide 58, on the main support structure 56 a stepper motor 60 is attached, on the stepper motor 60 a toothed pulley 62 is affixed. On the main support structure 24 a further toothed pulley 64 is attached, the toothed pulleys 62, 64 are connected via a toothed belt 66. The toothed belt 66 is connected to the primary shuttle 68 that runs along the linear guide 58. Alternatively, to the combination of toothed pulleys and belt a leadscrew may be employed. A secondary structure 70 is mounted on the shuttle 68 perpendicular to the main structure 56. The secondary structure 70 houses a linear guide 72, on the secondary support structure 70 a stepper motor 74 is attached, on the stepper motor 74 a toothed pulley 76 is affixed. On the secondary support structure 70 a toothed pulley 78 is attached, the toothed pulleys 76, 78 are connected via a toothed belt 80. The secondary structure houses a linear guide 72, along the linear guide 72 runs a secondary shuttle 82, on the secondary shuttle 82 a coupling 84 is attached. The coupling 84 is also connected to the top of the stylus 32. Above the main support structure 56 and secondary structure 70 a light sensing device 86 and associated optics 88 are attached to the top motor compartment 52.

The actuation of the stepper motor 74 attached to the secondary support structure 70 moves the shuttle 82 on the linear guide 72 along the direction J1 as marked on figure 2(d). The actuation of the stepper motor 60 attached to the main support structure 56 moves the main shuttle 68 along the linear guide 58 in the direction J2 as marked on figure 2(d). As the main shuttle 68 and secondary shuttle 82 move, the top of the stylus 32 moves along the direction of the combined motion transmitted to it via mechanical coupling 84. Via the action of the male spherical bearing 48 and female spherical bearing 38 the ultrasonic transducer 16 is forced to pivot along the directions or a combination of J3 and J4 as marked on figure 2(d), about the centre of the circle 90, inscribed by the contact points of the set of three landing elements 26a-c and the surface of the object to be measured.

As the stylus 32 moves, the focused light beam from the laser diode 34 on the stylus 32 moves along the face of the light sensitive device 86. By determining the centre of the focus spot of the light beam along the coordinate system of the light sensitive device 86 and knowing the remainder of the geometry the angular displacement of the stylus 32 can be calculated. The light sensitive device 86 may be a four-quadrant position sensitive device (PSD), a charged couple device (CCD) or a complementary metal oxide semiconductor (CMOS) image sensor in the tracking system 30. In its most basic form, the angular displacement is measured about the plane defined by the contact points of the set of spheres 26a-c in contact with the surface of the object to be measured. The ultrasonic transducer 16 is mounted coaxially with the stylus 32 consequently it experiences the same amount of angular displacement. The ultrasonic transducer 16 will be making continuous measurements as it is moved. By controlled stepper motor movement, a deterministic and complete 360 degree polar scan is possible.

Control of the probe 12 is from an operating unit 14 which acts as a control and computational device which can be hard-wired or wirelessly connected to the probe 12. This computation device provides three functions. Firstly, it conducts all A-scan signal processing from the ultrasound measurements taken by the probe 12 in order to compile the polar scans. Secondly, it acts as a controller that may employ adaptive feedback methods to compile polar scans in an intelligent and more time-efficient manner. Thirdly, it typically provides all data processing by which the polar scans are automatically interpreted to provide the useful NDT information required by the user of the invention. However, it is further noted that some such local computation devices (e.g. a smart phone) may be networked and connected to other computation devices and/or ultrasound polar scan databases (e.g. within the cloud). As such, the polar scan data processing may not always be done locally by the computation device (i.e. processing 'on the edge'). Instead, some polar scan data processing algorithms that automatically interpret the compiled polar scans may incorporate artificial intelligence or machine learning methods distributed across wider computation/data storage resources (i.e. 'the cloud'). It will also be recognised that processing may also be incorporated in the probe 12.

In use, the probe 12 is located on a surface for inspection. An inspection scenario is depicted in Figure 3(a) with the selected measurement node 92, being the contact point, indicated on the inspection surface 94. The deformable coupling member 20 of the transducer 16 is in contact with the inspection surface 94 at the node 92 and held against it (i.e. by the user or other means) and holder sleeve 40 acting on the landing elements 26a-c, which will also contact the surface 94. For clarity, only the transducer 16 is shown in Figure 3(a) and reference is made to Figures 2(c) and 2(d) for those parts which hold the transducer 16 at a constant distance from the measurement node 92 and scan its orientation relative to the inspection surface 94.

The frame assembly 22 is held static so that the deformable coupling member 20 retains continuous contact with the surface 94 at the measurement node 92. Movement of the stylus 32 using the motion system 28 pivots the transducer 16 about the measurement node 92 by inducing movement of the upper end 17 of the stylus 32. This angularly scans an ultrasound transducer 16 generating a sequence of pulse-echo measurements at a high rate over a suitable range of orientations whilst this transducer 16 remains directed towards a single selected measurement point, the measurement node 92, on the inspection surface 94. The backscattered acoustic energy is collected at the transducer 16 and backscatter polar scans are constructed from the data combined with positional data collected by the tracking system 30 as the transducer 16 is moved.

The orientation of the ultrasound transducer 16 for each ultrasound measurement can be defined in polar coordinates relative to a reference vector on the inspection surface 94, as shown in Figure 3(a). By convention, this reference vector i.e. a polar coordinate origin can be taken as the inspection surface normal vector, i.e. the Z vector, at the measurement node 92 of the attached probe 12. From this reference vector, the transducer 16 orientation for each ultrasound measurement can be defined in terms of the incident polar angle Ψ(φ,θ) where φ is the rotation angle about some selected reference axis in the XY plane defined by the probe 12 attachment, and θ is the elevation angle of the transducer 16 away from the surface normal reference vector.

During a polar scan, each pulse-echo measurement made by the dynamically moving transducer 16 generates an A-scan as is known in the art. For a polar scan 100, a pre-defined polar map 98 of a fixed grid of energy bins B1 is created as illustrated in Figure 3(b), with concentric rings L1 to L4 indicating the elevation angle θ granularity and the radial lines L5 to L9 indicating the rotational angle φ granularity determining the area of each angular energy bin B1 within the polar map 98.

With the polar map 98 resolution grid defined, the polar scan 100 is created by making a multitude of pulse-echo measurements across a range of different oblique incident angles Ψn in order to appropriately populate the pre-defined energy bins B1 within the polar map 98. Movement is continued until all the energy bins adequately populated with bins typically having more than one measurement contributing which smooths out and suppresses system noise (e.g. measurement to measurement instrumentation variability from the pulser electronics). Therefore, an informative and low-noise polar map 98 of backscattered energy data emerges over an acceptably short time. The resulting polar scan 100 of backscattered energy, as illustrated in Figure 3(c), is the highly characteristic 2D intensity map (or a 3D surface) describing the structural characteristics or integrity of the part or structure being measured.

In the embodiment of Figures 2(a)-2(d) the movement of the stylus 32 is controlled and thus deterministic orbital motions within the probe 12 can be made which movements can be measured independently by the orientation tracking system 30 or could be inferred indirectly by dead-reckoning. With deterministic motion, the method can be optimised to only cover stylus 32 orientations in the angular vicinity of pre-determined stylus 32 orientations of interest e.g. around stylus 32 orientation predicted to return a peak in backscattered ultrasound energy for a known complex geometry object using Snell's Law of refraction and known or measured sound speed estimations; only covering stylus 32 orientations in the vicinity of stylus 32 orientations determined from polar maps from previous nearby co-located polar scan measurements; adapt the controlled stylus movements during the polar scan measurement based upon any form of real-time analysis of the recorded A-scans or portions of the evolving polar scan 100 as they are being compiled; and/or make modifications to the defined polar map 98 resolution during the polar scan 100 measurement to cover regions of the polar map 98 where features of interest (e.g. backscattered energy) are detected at a higher or optimal resolution.

Additionally, optimal adaptive polar scan paths for the stylus 32 can be derived automatically across different part geometries based upon reinforcement learning methods whereby a Neural network software agent can develop a suitable policy to minimise the time taken to populate the polar scan map with:- actions that induce all motions within the stylus 32, positive rewards that are provided by continuous population of previously uncovered or not adequately covered portions (i.e. energy bins) of the polar map 98 where energy resides and negative rewards (penalisation) for covering stylus 32 orientations where no energy is present or redundant coverage of previously covered portions of the polar map 98.

In an alternative method, the motion system 28 does not induce adaptive or regular predictable pattern motion of the stylus 32, but rather creates correlated or uncorrelated pseudo-random motion of the stylus 32 that is measured by the tracking system 30 to determine orientations of the transducer 16 so as to associate A-scans to the polar map 98 bins B1.

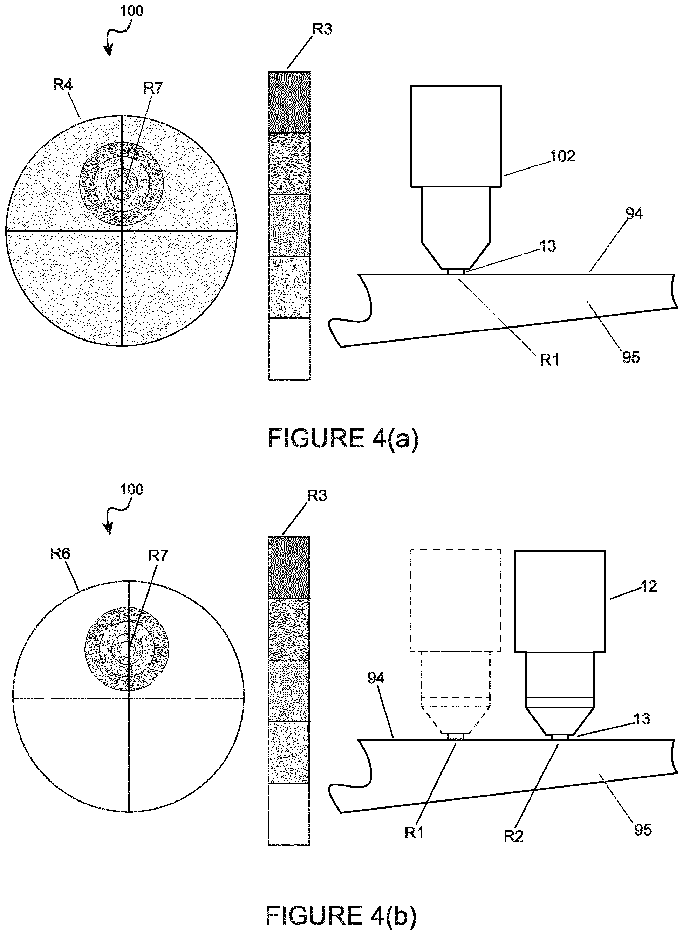

While the method describes the polar scan measurement being made at a single node 92 on a surface 94 of an object, the measurement may be repeated across any part or structure under test. Advantageously, where a sequence of spatially close polar scan measurements is made across an arbitrary non-parallel planar structure such as an aerospace part, more time-efficient measurements are achieved by automated interpretation of the polar scan at one measurement location so as to affect reduced coverage but still entirely useful polar scan measurements at any spatially adjacent measurement locations. This is illustrated in Figures 4(a) and 4(b) in which Figure 4(a) shows a polar scan map R6 compiled from a full 360° polar scan measurement taken with the probe 12 at position R1 on the surface 94 of the object 95. As shown, the main energy peak of interest returned is offset from the surface normal polar map origin (as depicted at R4 by the peak coordinate Ψp(φ,θ), as indicated using the energy intensity map R3). Due to the position, size and shape of this polar amplitude or intensity energy peak from the polar scan measurement at R1, automated assumptions about the geometry of the part can be made e.g. it is likely to be a planar wedge. Accordingly, the polar map area over which to make polar scan measurements at spatially close locations e.g. R2 in Figure 4(b), with the polar scan R6 taken at R2 only needs to cover the polar area about the offset peak R7 which is taken from the previous measurement at R1 (i.e. it is the peak coordinate Ψp(φ,θ) R4). The reduced area is programmed into the motion system 28 to apply deterministically controllable movement to the stylus 32 as a sequence of orbital movements centred about the peak coordinate R7/R4, which in the embodiment shown in Figures 2(a)-(d) could be achieved by suitable offset control signals providing sine and cosine displacements with step-increased amplitudes across the mechanically coupled orthogonal X and Y mechanical axes of motion provided by the stepper motors 60,74.

In addition to centring a reduced area polar scan about an energy peak exhibited by a previous close-by measurement, as shown in Figures 4(a)-(b), any detectable trends in the positioning and/or movement of energy peaks (or any detectable polar scan feature) observed across an extended sequence of spatially correlated polar scan measurements across a part can be used to refine or modify the reduced area coverage of subsequent polar scans in accordance with predictable changes in the backwall geometry. Moreover, one or more polar scan maps compiled by the invention at any points across the structure or object under test can be used to influence or determine suitable inspection locations or paths for one or more subsequent polar scan measurements. That is, interpretation of one or more polar scan maps generated by the invention can be used for real-time on-the-fly automated determination of optimal scan sequences for any automation platform used by the invention.

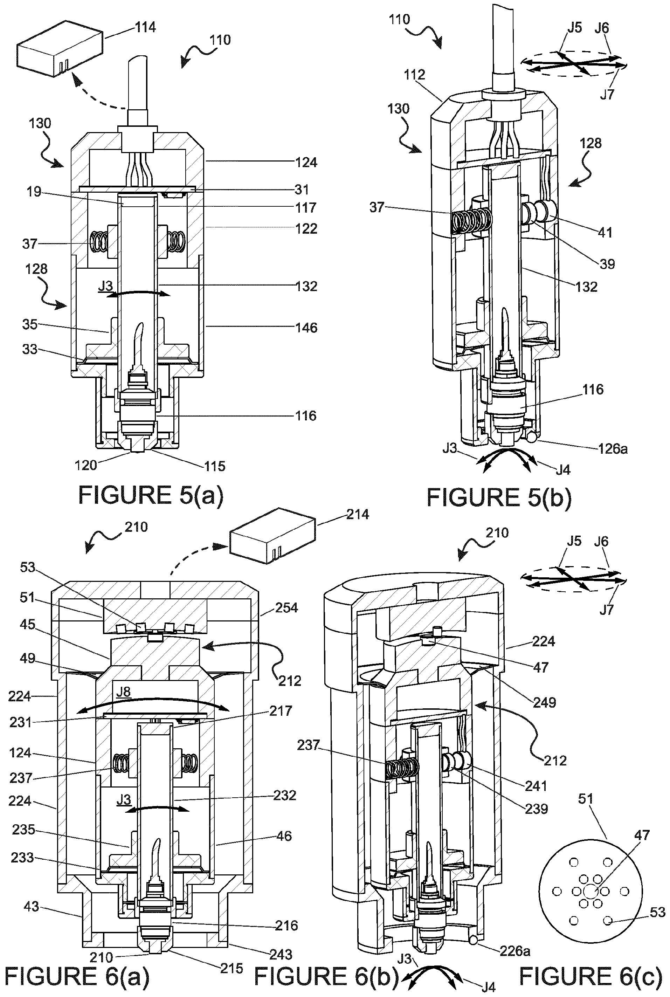

Reference is now made to Figures 5(a) and (b) of the drawings which illustrate a compact portable ultrasonic inspection apparatus, generally indicated by reference numeral 110, comprising a hand-held ultrasonic probe 112 and an operating unit 114, according to further embodiment of the present invention. Like parts to those of the apparatus of Figures 2(a)-(d) are given the same reference numeral with the addition of 100 to aid clarity. Figures 5(a) and 5(b) show an alternative embodiment of a motion system 128 and tracking system 130.

In the motion system 128, the stylus 132 has a plug of conductive material mounted coaxially around it. Towards an upper end 117 of the stylus 132, a set of permanent magnets 39 and compression springs 37 of equal number to each other, are arranged in opposing directions between the stylus 132 and frame 122. Opposite the permanent magnets 39 on the frame 122 are arranged electromagnets 41. At a lower end of the middle section 146, a support sleeve 35 is attached to the stylus 132, being connected to the inner perimeter of a diaphragm spring 33. The outer perimeter of the diaphragm spring 33 is attached to the middle section 146 of the frame assembly 122. Alternatively, a set of voice coils or double action pneumatic pistons may be employed to provide similar set of forces as the one supplied by the electromagnets 41 permanent magnets 39 and springs 37. The actuation of the electromagnets 41 either individually or as a set creates an attraction force to the corresponding permanent magnets 39. This results in the top portion 117 of the stylus 132 to move along the primary directions J5 to J6 solely or partially. The forces supplied by the springs 37 force the top portion 117 of the stylus 132 to return to its initial position. As the top portion 117 of the stylus 132 is moved the lower portion of the stylus 132 is constrained by the diaphragm spring 33 resulting in a pivoting action along the directions or a combination of J3 and J4, about the contact point 92 of the coupling member 120 to the surface 94 being inspected.

An inductive tracking system 130 operates as the top portion 117 of the stylus 132 moves within a magnetic field. The plug 19 disturbs the magnetic field and inductive sensing coils with associated electronics 31, allow a determination of the angular displacement of the stylus 132 and with it, the ultrasonic transducer 116.

Apparatus 110 facilitates predominantly random or stochastic wobbling movements within the stylus 132 about a single normal incidence rest vector in order to compile 360° polar scan maps in a simple mechanical structure. Movement can be induced by a series of impulsive signals applied across the array of electro-magnets with some appropriate amplitude and periodicity with the transfers between potential and kinetic energy within the attached springs giving extended coverage over the polar scan map. This apparatus 110 benefits from a simple and compact design and lends itself to a method which uses reinforcement learning (RL) to optimise scanning actions via a neural network software agent experiencing or exploring either the real or simulated scanning environment (i.e. by trial and error). Model-free or model-based RL are realised with finite-element software being used to simulate ultrasonic wave propagation across a polar scan. The reinforcement learning agent can learn to provide optimal actions (i.e. impulsive control signals) to yield the polar scan map for different geometries in an optimal manner (i.e. optimised informative scanning movements).

The motion system 128 does not directly control stylus 132 movement as previously described in the first embodiment shown in Figures 2(a)-(d) 28, but creates inherently more imprecise and stochastically induced orbital motions on the stylus 132 that are still measured accurately by the tracking system 130 to determine orientations of the transducer 116 so as to associate A-scans to the polar map 98 bins B1.

Reference is now made to Figures 6(a)-(b) of the drawings which illustrate a compact portable ultrasonic inspection apparatus, generally indicated by reference numeral 210, comprising a hand-held ultrasonic probe 212 and an operating unit 214, according to further embodiment of the present invention. Like parts to those of the apparatus of Figures 2(a)-(d) and 5(a)-(b) are given the same reference numeral with the addition of 200 to aid clarity. Apparatus 210 combines the imprecise stochastic wobbling motion of the embodiment of Figures 5(a)-(b) with a wider plurality of rest orientations arranged in a set pattern with deterministic control allowing the wobbling device to switch between these stylus rest orientations.

This embodiment includes the motion system 128 and tracking system 130 described with reference to Figures 5(a)-(b) with effectively the probe 112 being located entirely within the housing 224 and a protective sleeve 43 extending from a base of the housing 224. On the connector housing 254 a multifaceted boss 45 is attached which holds a number of permanent magnets 47. An external diaphragm spring 49 is attached between the external face of the inner housing 24 and the outer housing 224. An internal ring 51 is attached to an inner surface of the connector housing 254, the internal ring 51 holds a set of electromagnets 53. Below the outer housing 224 the lower sleeve 243 is attached. The landing elements 226a-c are located within the lower sleeve 243

Movement of the stylus 232 and with it the transducer 216 is by the same action as for the motion system 128, resulting in a pivoting action along the directions or a combination of J3 and J4, about the centre of the circle 90, inscribed by the contact points of the set of landing elements 226a-c and the surface 94 of the object 95 to be measured. An extra pivoting action e.g. J8 may be compounded to the pivoting motion of the stylus 232. By activating the top set of electromagnets 53 the inner housing 124 and all items attached to it may be tilted towards the activated electromagnets 53 via the action of the external diaphragm spring 49. The orientation of the transducer 216 is tracked by the same tracking system 130 as for the previous embodiment.

The use of the magnets 53 allows this embodiment to position the stylus 232 at pre-set rest orientations outside the direction of normal incidence to the surface 94. Accordingly, measurements by inducing coarse random wobbling motions within the stylus with a regular series of control signals supplied that periodically switch the inner probe 112 to each of the rest orientations in series provides a quick initial assessment of where the important backscattered energy of interest resides within the overall wide-elevation polar map. Such an initial coarse discovery stage across all rest orientations followed by a sequence of fine-scale measurements across only the rest orientations with detected energy results in a time-efficient and informative high-resolution polar scan using this embodiment of the invention.

All embodiments of the invention based upon controlled deterministic or adaptive stylus motion as shown in Figure 2(a)-(d) compile highly repeatable and informative polar scans of backscattered energy related to the internal structure or health condition of the part in the vicinity of the measurement point. However, the embodiments involving imprecise and stochastically induced stylus motions, as in Figures 5(a)-(b) or Figures 6(a)-(c), can also equally compile the same repeatable and informative polar scans. This is primarily because both employ accurate and independent methods for tracking the stylus orientation during the scan, although the time taken to complete the polar scan may differ.

In all embodiments, the compiled polar scan 100 of backscattered energy can be automatically interpreted (e.g. the polar coordinates of energy peaks extracted) via a processing algorithm implemented within the operating unit. This automatically selects one or more most useful A-scans from the multitude of A-scans recorded during the polar scan compilation for a more reliable and/or repeatable dimensional measurement or sound-speed estimation to be made. For example, when measuring a planar non-parallel geometry part, the backscattered energy polar scan allows the A-scan taken from an orientation closest to the peak energy polar coordinate determined from the compiled polar scan map to be selected automatically for use within a subsequent dimensional or sound speed measurement. The compiled polar scan can also be automatically interpreted using any classification, machine learning or pattern recognition method in order to automatically select the most appropriate time-delay estimation algorithm for the echoes present within the selected A-scan (i.e. selection of Mode-2, Mode-3 or spectral methods as known in the art). In this way, the invention provides more reliable repeatable and accurate dimensional measurements across any part geometry without need for human interpretation.

A further aspect of the invention concerns the point at which compilation of the polar scan map is automatically halted and is considered by the system to be complete and ready for interpretation. This can be based simply on a predetermined scan time period or a set sequence of movements. However, it can also involve feedback monitoring the number of A-scans in each energy bin of the polar scan map and a fixed or adaptive A-scan threshold count. On completion of the induced scanning movements of the stylus 32 and the processing of all of the ultrasound measurements to compile and/or display a partial or complete 360° azimuthal polar coordinate scan 100 of backscattered acoustic energy, further signal and data processing is conducted by the operating unit 14 to extract the additional useful thickness gauging or health-condition information. For example, NDT information in the vicinity of the measurement node 92 relating to:-
(i) The internal dimensional geometry of the object under test e.g. one or more thickness measurements, the vicinity to an internal feature or classification of back wall shape; and/or
(ii) The structural characteristics of the object under test e.g. fibre orientation or strain tensor; and/or
(iii) The structural integrity of the object under test e.g. detection of delamination, voids, cracks, ply waviness, porosity, corrosion, inclusions; and/or
(iv) The quality of an internal weld or adhesive bond between the object under test and one or more adjoined solid objects.

Depending upon the elevational displacement achieved by the stylus 32 away from the inspection surface 94 normal direction, the wave modes excited and propagating within the inspection part may constitute longitudinal wave (L-wave) and/or shear wave (S-wave) modes, with the latter generated through the process known as mode-conversion at the interface between the deformable coupling member 20 and the inspection part/structure 94. For inspections of simple isotropic part geometries that only deviate from a parallel front-back wall geometry by up to say 20°, the required elevation angle of the stylus away from the surface normal vector may only be quite modest (say ~+-5°) and the dominant L-wave mode will propagate within the inspection part. However, for more extreme geometries or when inspecting more complex structures (e.g. laminated composites), the orbital displacement of the stylus 32 may need to extend to more extreme elevation angles. In this case, the predominant L-wave mode may be diminished or may even disappear altogether (e.g. totally internally reflected at the 1st critical angle of incidence) and the shear wave mode becomes the primary acoustic energy propagating and causing reflection echoes within the inspection part. It is therefore highlighted that both distinct L wave and S wave polar scans may also be compiled, using appropriate time gating in A-scan processing to reflect that S waves are much slower than L waves (i.e. L wave speed is approximately twice S wave speed). For some complex geometries, the method will generate distinct L wave and S wave polar scan maps 100 that can be used together to determine structural characteristics and/or health assessments about the inspection part in the vicinity of the measurement node 92.

In a preferred embodiment, a consistent train of discrete broadband ultrasonic waveforms transmitted from the transducer 16, as commonly used in many ultrasound inspection applications are used. However, for modal inspections of composites, the waveforms transmitted by the transducer 16 will be a sequence of extended continuous wave (e.g. sinusoidal) signals. Such harmonic ultrasonic excitation signals are known to yield polar scans that are often more useful for stimulating more informative wave modes e.g. extensional and flexural plate or Lamb wave modes within some types of laminated composite structures.

In the preferred embodiment, the backscattered ultrasonic polar scans are generated from compiling the acoustic energy reflected directly back from internal defects, laminated surfaces, and the back wall of the object under test. In a further embodiment, double through transmission (2T), is used to compile the polar scans 100. This method involves taking measurements from a single pulse-echo ultrasound transducer 16, as with an additional synchronised ultrasound reflector plate device e.g. a smooth high acoustic-impedance mirror with ultrasonic coupling, located on the opposite side of the object under test. This method is primarily used for the inspection of composite materials such as those used in aerospace structures.

It will be recognised that different forms of polar map 98 may be compiled using either time-domain or frequency-domain processing. Other measures from the A-scans, such as time-of-flight information or parametric model coefficients from echoes reflected by the part or structure may be used to compile useful polar scans 100. Indeed any signal metric extracted consistently from the ensemble of A-scans recorded and processed can be used to compile a polar scan.

The probe 12,112,212 can be made to fit into a hand-held housing 24,124,224. This gives dimensions of the probe to be no more than 15cm in length and 5cm in width. More preferably, the dimensions are smaller such as a diameter of less than 20mm and a length less than 50mm. To accommodate different geometries of surfaces the landing elements 26a-c can be made adjustable as illustrated in Figures 7(a) and 7(b). Each landing element or sphere 26a-c is arranged on an end of a swing arm 55, rotatable around a support shaft 59, bounded by an upper and lower ring 63,57. A torsion spring 61 is arranged around the shaft 59 with an end connected to the swing arm 55 and the other connected to the lower ring 57. A captive ring 65 has a set of three pins 67 attached with a finger tab that so that when the captive ring 65 is rotated in the direction J14 as shown on Figure 7(b), the pins 67 also follow that rotation and come into contact with a respective swing arm 55. Consequently, the swing arm 55 rotates about its respective shaft 59, the torsion spring 61 resists that rotation and dynamically balances the swing arm 55 in position. As the pins 67 force each swing arm 55 to rotate, the spheres 26 fall inwards towards the direction J13, inscribe circles of reducing diameters, e.g. circles K2 to K4 are shown. The actuation of the mechanism can be done manually or it can be motorised via the application of stepper or servo motors via direct drive or a suitable gearbox/coupling.

This radial adjustment to the three landing elements 26a,b,c facilitates a useful level of control in holding the housing 24 normally against different inspection surface 94 topographies for the polar scan measurement. However, the apparatus 10,110,210 may also include means by which each of the landing elements can be independently adjusted axially in order to modify the rest orientation of the housing at a number of tilt vectors (orientations) away from the nominal inspection surface normal vector during a polar scan measurement. This consequently provides an alternative embodiment to the outer mechanism shown in figures 6(a)-(c) that provides deterministic control and adaptive feedback across a wider elevation polar scan. With reference figures 8(a) and 8(b), an axial displacement mechanism is shown which allows axial travel up or down to any of the individual landing elements 26a,b,c within the apparatus 10. This may be provided as an alternative or an addition feature to the radial adjustment mechanism shown on figures 7(a) to 7(b). The combination of radial and axial adjustment to the at least three landing elements also facilitates stable surface normal attachment to a range of different planar and curved inspection surface geometries. For example, suitable radial settings and precise axial extension to two of the three landing elements would allow more stable normal attachment of the invention to a range of different pipe geometries with different radii. In such cases, the inspection surface normal vector used (i.e. the polar scan origin) needs to take account of any extensions applied to the landing elements.

The axial displacement mechanism has a main body 133 which has three cylindrical cavities therein. While three cavities are shown there may be more. Each cavity includes a thumbnut 138 which is kept captive in position via a spacer 135. Within the thumbnut 138, a threaded rod 134 with a ball end 26a is housed and behind the threaded rod 134 a compression spring 137 is held in place via a plug 136. The plug 136 holds the compression spring 137 in place, the compression spring 137 applies a force parallel to the axis of the threaded ball end rod 134. As the thumbnut 138 is rotated about its axis along direction J15 as marked on figure 8(b), the threaded ball end rod 134 is forced to move vertically along the direction of J16 as marked on figure 8(b). in this way, axial movement of the individual landing member 26a on the threaded rod 134 can be moved axially with respect to the other landing elements 26b,c and the housing 24. By manipulating the corresponding thumbnuts (not shown) on the perimeter of the main body 133 the overall probe 12, can be tilted allowing the stylus 32,132,232 to reach larger travel angles. The manipulation of the thumbnuts 138 can be done manually or can be motorised via a rack and pinion mechanism or other equivalent power transmission scheme. This axial displacement mechanism allows a user to displace the landing elements to allow modifications to the housing orientation during a polar scan or to attach the invention to a wider range of curved parts. It will be realised that the three landing elements 26a-c about the measurement point without axial displacement describe or approximate a surface normal plane at the measurement point 92 with a normal vector (i.e. given mathematically by the cross product of vectors joining the elements) that coincides with the rest orientation of the stylus 32 (i.e. the nominal orientation of the attached probe) and consequently provides a polar coordinate origin for subsequent polar scan maps compiled by using the probe 12.

While the hand-held arrangement of the probe 12,112,212 allows a human operator to apply a force to hold it against the surface 94 during measurement, it will be appreciated that dedicated fixture and or automatic means such as but not limited to any form of robot arm or multi-axis numerically controlled positioning apparatus could be used. The level of automation provided by the apparatus 10,110,210 for any inspection geometry or material type makes it suitable for deployment from a range of automated and autonomous inspection platforms, typically used where manual inspections are either inconvenient, not cost-effective or the asset being inspected is simply too difficult to access by a human inspector. Figures 9(a) and 9(b) show automated platforms in the form of an inspection crawler being a small unattended ground vehicle (SUGV) 73 with a robotic arm, and an inspection unmanned drone 75 from which the apparatus is deployed on a winch 77, respectively. However, it will be appreciated that other platforms such as an ROV provide for other inspection scenarios e.g. sub-sea oceanic inspections of underwater oil/gas installations using an ROV).

The apparatus 10,110,210 therefore finds application in NDT inspection of isotropic metallic parts or structures with any front-wall to back-wall geometry (i.e. either non-parallel or parallel) such as the additively manufactured metal parts and structures from selective laser melting machines, binder fusion methods, and wire and arc welding. These are used to inspect safety-critical assets within the aerospace, oil/gas and defence industries and as such the method of the invention can be used to undertake corrosion assessment; porosity measurement and/or flaw detection and classification results. The apparatus 10,110,210 and method also finds application as an in-service NDT inspection tool for composite aircraft structures (e.g. Polymer-matrix composites (PMCs)), particularly in determining Barely Visible Impact Damage (BVID) events. The hand held apparatus 10,110,210 can be carried by an aerospace structure inspection engineer to provide useful 'spot-check' structural damage assessment and effective structural lifecycle management through damage tolerance. For example, an inspection practitioner may take repeated polar scan measurements across an aerospace structure at exact locations where a BVID event (or any damage) is detected and use changes in the polar scan or scans to assess the severity, changing state or importance of the damage. As such, any type of historical (e.g. time-series) analysis of a series of polar scans taken at the same exact location over extended time periods becomes a powerful diagnosis method with the present invention.

The invention can similarly be used to assess or diagnose potential damage to safety-critical structures or objects in a more convenient manner in the field such as composite crash or military helmets or composite bicycle frames without need for expert interpretation.

In addition to the manual application of the present invention across a range of safety-critical assets, its application at positions of interest may be entirely automated and cued by a range of external form and/or surface condition sensing modalities. For example, visual and/or infrared imaging cameras (e.g. deployed on an inspection drone) may automatically indicate regions of potential damage from which one or more precise polar scan measurement nodes for the invention can be determined (e.g. some within and some just beyond the region of potential damage). The invention may also be cued to conduct one or more polar scan measurements assessing the internal condition from various sensing modalities that measure the external shape or form of the object or structure under inspection. This includes non-contact optical techniques that make use of:- an array of time of flight proximity sensors, one or more range imaging cameras or one or more lidar sensors (e.g. as integrated into smart-phones such as the iPhone12 Pro^{®}).

Any such surface form measurement can be used to accurately determine the precise locations to apply the present invention to provide an internal metrology or flaw detection measurement. The form data may further be used to datum the object or structure under inspection with respect to a CAD model. Information within such CAD models may further guide the exact positioning of the probe of the present invention. The external form measurement may track changes to the external surface that may be used and/or formally combine with information contained within the polar scans generated by the present invention. That is, formal sensor data fusion methods (e.g. at the decision or pixel level) may be applied between the surface form measurement and the internal measurement provided by the present invention in order to realise a more robust or more informative NDT condition diagnosis of the asset being inspected.

## Claims

1. A portable ultrasonic inspection apparatus (10,110,210) comprising:
an ultrasonic probe (12,112,212) and an operating unit (14,114,214), the ultrasonic probe comprising:
an ultrasonic transducer (16,116,216) including a coupling member (20,120) for contacting and acoustically coupling to a measurement point on a surface of an object to be inspected; and
a housing (24,124,224) comprising a frame assembly (22,122) in which the ultrasonic transducer is located with the coupling member arranged at an end thereof;
the probe includes three landing elements (26a,b,c, 226a,b,c) for locating the probe on the surface of the object, the landing elements being spaced apart from each other in an array and located at the end of the housing, with the coupling member to contact the measurement point being arranged within the array; and
**characterised in that**:
the portable ultrasonic inspection apparatus (10, 110, 210) comprises a stylus (32, 132, 232),
the ultrasonic transducer and the coupling member are positioned on the stylus (32,132,232); the housing includes a motion system (28,128) to pivot the stylus about the measurement point; and
the three landing elements about the measurement point describe a surface normal plane at the measurement point with a normal vector coinciding with a rest orientation of the stylus to provide a polar coordinate origin for the compilation of polar scan maps using the probe.

2. Apparatus according to claim 1 wherein the ultrasonic transducer is a pulse echo transducer.

3. Apparatus according to claim 1 or claim 2 wherein the landing elements are spherical bearings.

4. Apparatus according to any preceding claim wherein the apparatus includes fixing means to hold the landing elements against the surface and wherein the fixing means comprises one or more elements selected from a group comprising: magnets, electromagnets, one or more vacuum suction pads, and a lining of high-friction material.

5. Apparatus according to any preceding claim wherein the landing elements are configured to move radially with respect to the coupling member.

6. Apparatus according to any preceding claim wherein the motion system comprises an arrangement located between the stylus and the frame assembly, the arrangement including one or more elements selected from a group comprising: permanent magnets, controllable electro-magnets, mechanical springs, electric motors, pulleys, pistons and positional actuators.

7. Apparatus according to any preceding claim wherein the apparatus includes a tracking system (30,130) for determining the stylus orientation with respect to the measurement point on the surface of the object.

8. Apparatus according to claim 7 wherein the tracking system comprises an arrangement selected from a group comprising: a light-source mounted on the moving stylus facing an optical position-sensitive detector on the frame assembly, an imaging sensor on the frame assembly configured to have the moving stylus within its field of view, a conductive plug on the moving stylus facing a quadrature array of inductive sensing coils on the frame assembly, an array of eddy-current sensors on the stylus, an array of eddy-current sensors on the frame assembly, an array of capacitive sensors on the stylus, and an array of capacitive sensors on frame assembly.

9. Apparatus according to any preceding claim wherein the apparatus further includes means to position the probe on the surface, these means being selected from a group comprising: a drone, an articulated arm on a small unattended ground vehicle (SUGV), a remotely operated vehicle (ROV) and an articulated arm on a multi-axis numerically controlled positioning apparatus.

10. A method of non-destructive inspection of an object comprising the steps:
(a) providing an ultrasonic inspection apparatus (10,110,210) according to any one of claims 1 to 9;
(b) locating the landing elements (26a,b,c,226a,b,c) on a surface (94) of the object and making contact on a measurement point (92) of the surface with the coupling member (20,120);
(c) inducing pivotal movement of the stylus (32,132,232) about the measurement point;
(d) taking oblique angle ultrasound measurements as the transducer (16,116,216) moves; and
(e) processing the ultrasound measurements as a polar scan map to provide inspection information.

11. A method according to claim 10 wherein the ultrasound measurements are collected as A-scans and processed by extracting a metric from the A-scans to provide at least a portion of a backscattered polar scan.

12. A method according to claim 11 wherein the polar scans of backscattered ultrasonic energy are compiled in a real-time.

13. A method according to any one of claims 10 to 12 wherein the movement of the transducer with respect to the contact point is measured and each ultrasound measurement is associated with a transducer position.

14. A method according to any one of claims 10 to 13 wherein the method includes adapting controlled transducer movements during the ultrasonic measurements based upon real-time analysis of the recorded A-scans and/or portions of the evolving polar scan as they are being compiled.

15. A method according to any one of claims 11 to 14 wherein the method includes the step of automatically interpretating the compiled polar scan to detect and/or classify structural defects based upon one or more of methods from a group comprising: conventional statistical square-law detection criterion; machine learning involving supervised learning; and unsupervised learning.

## Patentansprüche

1. Tragbare Ultraschallprüfvorrichtung (10, 110, 210), umfassend:
eine Ultraschallprobe (12, 112, 212) und eine Betriebseinheit (14, 114, 214), wobei die Ultraschallprobe Folgendes umfasst:
einen Ultraschallwandler (16, 116, 216), der ein Kopplungsteil (20, 120) zum Kontaktieren und akustischen Koppeln an einen Messpunkt auf einer Oberfläche eines zu prüfenden Objekts beinhaltet; und
ein Gehäuse (24, 124, 224), das eine Rahmenbaugruppe (22, 122) umfasst, in welcher der Ultraschallwandler vorgesehen ist, wobei das Kopplungsteil an einem Ende davon angeordnet ist;
wobei die Probe drei Landeelemente (26a,b,c, 226a,b,c) zum Vorsehen der Probe auf der Oberfläche des Objekts beinhaltet, wobei die Landeelemente in einem Array voneinander beabstandet und an dem Ende des Gehäuses vorgesehen sind, wobei das Kopplungsteil zum Kontaktieren des Messpunktes innerhalb des Arrays angeordnet ist; und
**dadurch gekennzeichnet, dass**:
die tragbare Ultraschallprüfvorrichtung (10, 110, 210) einen Stift (32, 132, 232) umfasst,
der Ultraschallwandler und das Kopplungsteil auf dem Stift (32, 132, 232) positioniert sind;
das Gehäuse ein Bewegungssystem (28, 128) beinhaltet, um den Stift um den Messpunkt zu schwenken; und
die drei Landeelemente um den Messpunkt eine Oberflächennormalebene an dem Messpunkt beschreiben, wobei ein Normalenvektor mit einer Ruheausrichtung des Stiftes zusammenfällt, um einen Polarkoordinatenursprung für die Erstellung von Polarscankarten unter Verwendung der Probe bereitzustellen.

2. Vorrichtung nach Anspruch 1, wobei der Ultraschallwandler ein Impulsechowandler ist.

3. Vorrichtung nach Anspruch 1 oder Anspruch 2, wobei die Landeelemente sphärische Lager sind.

4. Vorrichtung nach einem vorhergehenden Anspruch, wobei die Vorrichtung Befestigungsmittel beinhaltet, um die Landeelemente gegen die Oberfläche zu halten, und wobei das Befestigungsmittel ein oder mehrere Elemente umfasst, die aus einer Gruppe ausgewählt sind, umfassend: Magnete, Elektromagnete, ein oder mehrere Vakuumsaugkissen und eine Auskleidung aus Material mit hoher Reibung.

5. Vorrichtung nach einem vorhergehenden Anspruch, wobei die Landeelemente konfiguriert sind, um sich radial in Bezug auf das Kopplungsteil zu bewegen.

6. Vorrichtung nach einem vorhergehenden Anspruch, wobei das Bewegungssystem eine Anordnung umfasst, die zwischen dem Stift und der Rahmenbaugruppe vorgesehen ist, wobei die Anordnung ein oder mehrere Elemente beinhaltet, die aus einer Gruppe ausgewählt sind, umfassend: Permanentmagnete, steuerbare Elektromagnete, mechanische Federn, Elektromotoren, Riemenscheiben, Kolben und Positionsaktoren.

7. Vorrichtung nach einem vorhergehenden Anspruch, wobei die Vorrichtung ein Verfolgungssystem (30, 130) zum Bestimmen der Stiftausrichtung in Bezug auf den Messpunkt auf der Oberfläche des Objekts beinhaltet.

8. Vorrichtung nach Anspruch 7, wobei das Verfolgungssystem eine Anordnung umfasst, die aus einer Gruppe ausgewählt ist, umfassend: eine Lichtquelle, die an dem sich bewegenden Stift montiert ist und einem optischen positionsempfindlichen Detektor an der Rahmenbaugruppe zugewandt ist, einen Bildgebungssensor an der Rahmenbaugruppe, der konfiguriert ist, um den sich bewegenden Stift innerhalb seines Sichtfeldes aufzuweisen, einen leitenden Stecker an dem sich bewegenden Stift, der einem Quadraturarray von induktiven Erfassungsspulen an der Rahmenbaugruppe zugewandt ist, ein Array von Wirbelstromsensoren an dem Stift, ein Array von Wirbelstromsensoren an der Rahmenbaugruppe, ein Array von kapazitiven Sensoren an dem Stift und ein Array von kapazitiven Sensoren an der Rahmenbaugruppe.

9. Vorrichtung nach einem vorhergehenden Anspruch, wobei die Vorrichtung ferner Mittel zum Positionieren der Probe auf der Oberfläche beinhaltet, wobei diese Mittel aus einer Gruppe ausgewählt sind, umfassend: eine Drohne, einen Gelenkarm an einem kleinen unbeaufsichtigten Bodenfahrzeug (SUGV), ein fernbetriebenes Fahrzeug (ROV) und einen Gelenkarm an einer numerisch gesteuerten Mehrachsenpositioniervorrichtung.

10. Verfahren zur zerstörungsfreien Prüfung eines Objekts, umfassend die folgenden Schritte:
(a) Bereitstellen einer Ultraschallprüfvorrichtung (10, 110, 210) nach einem der Ansprüche 1 bis 9;
(b) Vorsehen der Landeelemente (26a,b,c, 226a,b,c) auf einer Oberfläche (94) des Objekts und Kontaktieren an einem Messpunkt (92) der Oberfläche mit dem Kopplungsteil (20, 120);
(c) Induzieren von Schwenkbewegung des Stiftes (32, 132, 232) um den Messpunkt;
(d) Durchführen von Schrägwinkelultraschallmessungen, während sich der Wandler (16, 116, 216) bewegt; und
(e) Verarbeiten der Ultraschallmessungen als eine Polarscankarte, um Prüfinformationen bereitzustellen.

11. Verfahren nach Anspruch 10, wobei die Ultraschallmessungen als A-Scans gesammelt und durch Extrahieren einer Metrik aus den A-Scans verarbeitet werden, um zumindest einen Anteil eines rückgestreuten Polarscans bereitzustellen.

12. Verfahren nach Anspruch 11, wobei die Polarscans von rückgestreuter Ultraschallenergie in Echtzeit kompiliert werden.

13. Verfahren nach einem der Ansprüche 10 bis 12, wobei die Bewegung des Wandlers in Bezug auf den Kontaktpunkt gemessen wird und jede Ultraschallmessung einer Wandlerposition zugeordnet ist.

14. Verfahren nach einem der Ansprüche 10 bis 13, wobei das Verfahren Anpassen von gesteuerten Wandlerbewegungen während der Ultraschallmessungen basierend auf Echtzeitanalyse der aufgezeichneten A-Scans und/oder Anteilen des sich entwickelnden Polarscans, während sie kompiliert werden, beinhaltet.

15. Verfahren nach einem der Ansprüche 11 bis 14, wobei das Verfahren den Schritt des automatischen Interpretierens des kompilierten Polarscans beinhaltet, um strukturelle Defekte basierend auf einem oder mehreren von Verfahren aus einer Gruppe zu detektieren und/oder zu klassifizieren, umfassend: herkömmliches statistisches Quadratgesetz-Detektionskriterium; maschinelles Lernen, das überwachtes Lernen involviert; und unbeaufsichtigtes Lernen.

## Revendications

1. Appareil d'inspection ultrasonique portable (10, 110, 210) comprenant :
une sonde ultrasonique (12, 112, 212) et une unité opérationnelle (14, 114, 214), la sonde ultrasonique comprenant :
un transducteur ultrasonique (16, 116, 216) comprenant un élément de couplage (20, 120) destiné à venir en contact avec et se coupler acoustiquement à un point de mesure sur une surface d'un objet à inspecter ; et
un boîtier (24, 124, 224) comprenant un ensemble cadre (22, 122) dans lequel le transducteur ultrasonique est situé avec l'élément de couplage agencé à une extrémité de celui-ci ;
la sonde comprend trois éléments d'atterrissage (26a, b, c, 226a, b, c) destinés à localiser la sonde sur la surface de l'objet, les éléments d'atterrissage étant espacés les uns des autres dans un réseau et situés à l'extrémité du boîtier, avec l'élément de couplage pour venir en contact avec le point de mesure étant agencé à l'intérieur du réseau ; et
**caractérisé en ce que** :
l'appareil d'inspection ultrasonique portable (10, 110, 210) comprend un stylet (32, 132, 232),
le transducteur ultrasonique et l'élément de couplage sont positionnés sur le stylet (32, 132, 232) ; le boîtier comprend un système de mouvement (28, 128) pour faire pivoter le stylet autour du point de mesure ; et
les trois éléments d'atterrissage autour du point de mesure décrivent un plan normal de surface au point de mesure avec un vecteur normal coïncidant avec une orientation de repos du stylet pour fournir une origine de coordonnées polaires pour la compilation de cartes de balayage polaire à l'aide de la sonde.

2. Appareil selon la revendication 1, dans lequel le transducteur ultrasonique est un transducteur d'écho d'impulsion.

3. Appareil selon la revendication 1 ou la revendication 2, dans lequel les éléments d'atterrissage sont des paliers sphériques.

4. Appareil selon l'une quelconque revendication précédente, dans lequel l'appareil comprend des moyens de fixation pour maintenir les éléments d'atterrissage contre la surface et dans lequel les moyens de fixation comprennent un ou plusieurs éléments choisis dans un groupe comprenant : des aimants, des électro-aimants, un ou plusieurs plateaux-ventouses d'aspiration, et un revêtement de matériau à frottement élevé.

5. Appareil selon l'une quelconque des revendications précédentes, dans lequel les éléments d'atterrissage sont configurés pour se déplacer radialement par rapport à l'élément de couplage.

6. Appareil selon l'une quelconque des revendications précédentes, dans lequel le système de mouvement comprend un agencement situé entre le stylet et l'ensemble cadre, l'agencement comprenant un ou plusieurs éléments sélectionnés dans un groupe comprenant : des aimants permanents, des électro-aimants commandables, des ressorts mécaniques, des moteurs électriques, des poulies, des pistons et des actionneurs de position.

7. Appareil selon l'une quelconque des revendications précédentes, dans lequel l'appareil comprend un système de suivi (30, 130) pour déterminer l'orientation du stylet par rapport au point de mesure sur la surface de l'objet.

8. Appareil selon la revendication 7, dans lequel le système de suivi comprend un agencement sélectionné dans un groupe comprenant : une source de lumière montée sur le stylet mobile face à un détecteur optique sensible à la position sur l'ensemble cadre, un capteur d'imagerie sur l'ensemble cadre configuré pour avoir le stylet mobile dans son champ de vision, une fiche conductrice sur le stylet mobile face à un réseau en quadrature de bobines de détection inductives sur l'ensemble cadre, un réseau de capteurs à courants de Foucault sur le stylet, un réseau de capteurs à courants de Foucault sur l'ensemble cadre, un réseau de capteurs capacitifs sur le stylet et un réseau de capteurs capacitifs sur l'ensemble cadre.

9. Appareil selon l'une quelconque des revendications précédentes, dans lequel l'appareil comprend en outre des moyens pour positionner la sonde sur la surface, ces moyens étant sélectionnés dans un groupe comprenant : un drone, un bras articulé sur un petit véhicule terrestre sans surveillance (SUGV), un véhicule télécommandé (ROV) et un bras articulé sur un appareil de positionnement à commande numérique multi-axe.

10. Procédé d'inspection non destructive d'un objet comprenant les étapes de :
(a) fourniture d'un appareil d'inspection ultrasonique (10, 110, 210) selon l'une quelconque des revendications 1 à 9 ;
(b) localisation des éléments d'atterrissage (26a, b, c, 226a, b, c) sur une surface (94) de l'objet et mise en contact sur un point de mesure (92) de la surface avec l'élément de couplage (20, 120) ;
(c) induction de mouvement pivotant du stylet (32, 132, 232) autour du point de mesure ;
(d) prise de mesures ultrasonores à angle oblique lorsque le transducteur (16, 116, 216) se déplace ; et
(e) traitement des mesures ultrasonores comme une carte à balayage polaire pour fournir des informations d'inspection.

11. Procédé selon la revendication 10, dans lequel les mesures ultrasonores sont collectées sous forme de balayages A et traitées en extrayant une métrique des balayages A pour fournir au moins une partie d'un balayage polaire rétrodiffusé.

12. Procédé selon la revendication 11, dans lequel les balayages polaires d'énergie ultrasonique rétrodiffusée sont compilés en temps réel.

13. Procédé selon l'une quelconque des revendications 10 à 12, dans lequel le mouvement du transducteur par rapport au point de contact est mesuré et chaque mesure ultrasonore est associée à une position du transducteur.

14. Procédé selon l'une quelconque des revendications 10 à 13, dans lequel le procédé comprend l'adaptation de mouvements de transducteur contrôlés pendant les mesures ultrasoniques sur la base d'une analyse en temps réel des balayages A enregistrés et/ou des parties du balayage polaire évolutif au fur et à mesure de leur compilation.

15. Procédé selon l'une quelconque des revendications 11 à 14, dans lequel le procédé comprend l'étape d'interprétation automatique du balayage polaire compilé pour détecter et/ou classifier des défauts structurels sur la base d'un ou de plusieurs procédés d'un groupe comprenant : un critère de détection de loi carrée statistique classique ; un apprentissage automatique impliquant un apprentissage supervisé ; et un apprentissage non supervisé.
